(19) Europäisches Patentamt
European Patent Office
Office européen des brevets

(11) Publication number: **0 099 251 A2**

(12) **EUROPEAN PATENT APPLICATION**

(21) Application number: 83303978.7

(51) Int. Cl.$^3$: **C 08 L 23/10**

(22) Date of filing: 07.07.83

(30) Priority: 09.07.82 JP 120353/82

(43) Date of publication of application: 25.01.84 Bulletin 84/4

(84) Designated Contracting States: BE DE FR GB IT NL

(71) Applicant: SUMITOMO CHEMICAL COMPANY, LIMITED
15 Kitahama 5-chome Higashi-ku
Osaka-shi Osaka-fu(JP)

(72) Inventor: Hao, Hideyuki
Sumitomo Shiizu Ryo No. 832-4, Shiizu
Ichihara-shi Chiba(JP)

(72) Inventor: Kawakita, Toshio Sumimoto Kamiwaseda Shataku
Room No. 5206 No. 135, Iriyamazu
Ichihara-shi Chiba(JP)

(72) Inventor: Kuroda, Kazuhisa Sumitomo Shataku
Room No. 511 No. 1-9 Yushudai Nishi
Ichihara-shi Chiba(JP)

(74) Representative: Moore, Anthony John et al,
Gee & Co. Chancery House Chancery Lane
London WC2A 1QU(GB)

(54) **Polypropylene resin film suitable for the deposition of aluminium thereon.**

(57) A film for the deposition of aluminum thereon and which is formed from a resin composition comprising a blend of 100 parts by weight of polypropylene resin with (i) 0.01 to 0.2 part by weight of an antioxidant having a melting point of at least 80°C and (ii) 0 to 0.5 part by weight of an antiblocking agent, the blend containing 5 wt% or less of cold xylene-soluble matter. The film of the invention has greatly improved adhesion to aluminum.

EP 0 099 251 A2

Croydon Printing Company Ltd.

# POLYPROPYLENE RESIN FILM SUITABLE FOR THE DEPOSITION OF ALUMINUM THEREON

This invention relates to polypropylene resin film suitable for the deposition of aluminum thereon.

Recently, aluminum-deposited plastics film has come into general use in many areas such as food and garment packaging, condensers and stickers. This is because by using aluminum-deposited film, a beautiful metallic gloss can be easily obtained; and in the case of packaging films, the demand for which has increased greatly in recent years, the contents can be protected from water, oil, oxygen and light.

Such aluminum-deposited film is required to have firm adhesion between the substrate film and the aluminum. However, films formed of polyolefins, including polypropylene, have poor adhesion, and there is room for improvement in this respect.

We have discovered that the adhesion between a polypropylene film and aluminum is related to the additives and oligomers contained in the polypropylene; and that the adhesion can be greatly improved if the type and quantity of the additives and oligomers is controlled. The present invention is based on these findings.

According to the present invention there is provided a film suitable for the deposition of aluminum thereon and formed from a resin composition comprising a blend of 100 parts by weight of polypropylene resin with (i) 0.01 to 0.2 part by weight of an antioxidant

having a melting point of at least 80°C and (ii) 0 to 0.5 part by weight of an antiblocking agent, the blend containing 5 wt% or less of cold xylene-soluble matter.

The polypropylene resins usable in the present invention include propylene homopolymer, copolymers of propylene and ethylene, copolymers of propylene and an α-olefin having 4 to 10 carbon atoms, and copolymers of propylene, ethylene and an α-olefin having 4 to 10 carbon atoms. Of these, propylene homopolymer, propylene-ethylene copolymer, propylene-butene-butene-1 copolymer, and propylene-ethylene-butene-1 copolymer are preferred. They may be used in combination with one another.

Specific examples of the antioxidant having a melting point of at least 80°C include the following (i) to (vii).

(i) Tetra[methylene-3-(3,5-di-t-butyl-4-hydroxyphenyl)propionate]methane

0099251



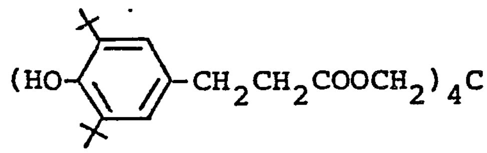

(Trade name: Irganox 1010)

(ii) 1,3,5-Trimethyl-2,4,6-tris(3,5-di-t-butyl-4-hydroxybenzyl)benzene

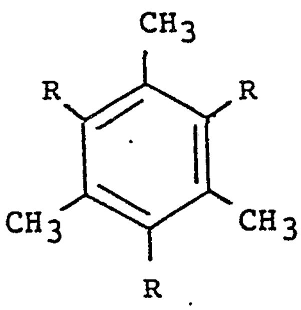

R : 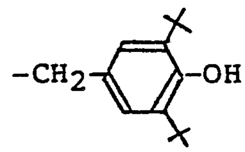

(Trade name: Irganox 1330)

(iii) 1,1,3-Tris(2-methyl-5-t-butyl-4-hydroxyphenyl)-butane

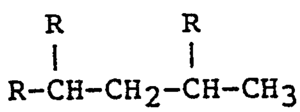

R : 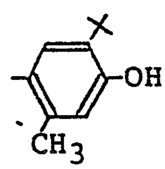

(Trade name: Topanol CA)

(iv) Tris(3,5-di-t-butyl-4-hydroxybenzyl)isocyanurate

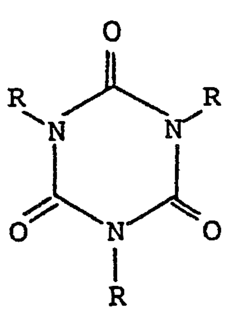

R : 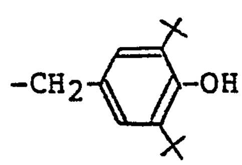

(Trade name: Goodrite 3114)

(v) 3,5-Di-t-butyl-4-hydroxyhydrocinnamic acid tri-[1,3,5-tris(2-hydroxyethyl)-S-triazine-2,4,6-(1H, 3H, 5H)-trione] ester

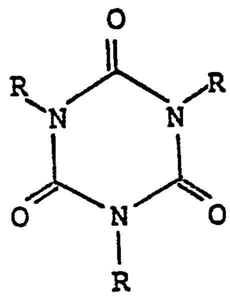

R : 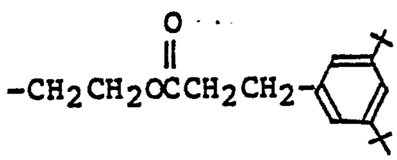

(Trade name: Goodrite 3125)

(vi) Bis-[3,3-bis-(4'-hydroxy-3'-t-butyl-phenyl)-butanoyl]-glycol ester

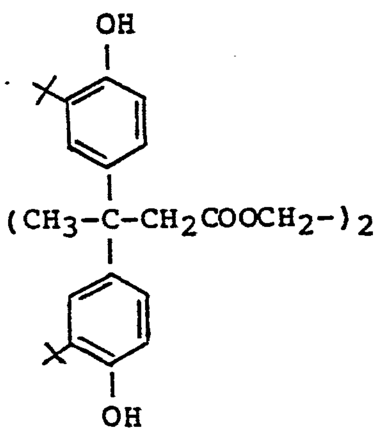

(Trade name: Phostanox 03)

(vii) 1,3,5-Tris(4-t-butyl-3-hydroxy-2,6-dimethylbenzyl)-isocyanurate

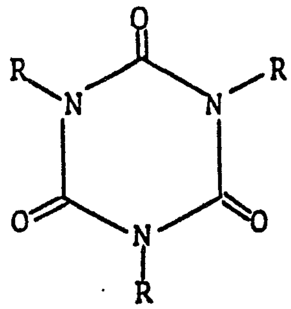

R:

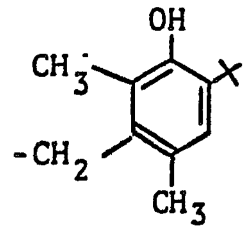

(Trade name: Cyanox 1790)

As stated, the antioxidant should be added in an amount of 0.01 to 0.2 part by weight per 100 parts by weight of the polypropylene resin. If the antioxidant is used outside the above specified range, the resulting film has poor adhesion to aluminum. When present in an amount exceeding 0.2 part by weight, the antioxidant is more likely to migrate to the film surface.

As the antiblocking agent, an inorganic fine powder can suitably be used. It can be added in an amount of up to 0.5 part by weight, preferably less than 0.3 part by weight, per 100 parts by weight of the polypropylene resin. If the antiblocking agent is used outside the above-specified range, the resulting film has poor adhesion to aluminum. When present in an amount exceeding 0.3 part by weight, the antiblocking agent will make the film surface extremely rough. Examples of antiblocking agents include silicon dioxide, aluminum oxide, calcium carbonate, talc, kaolin and zeolite.

Usually, polyolefin resins including a polypropylene resin incorporate a stabilizer such as a metal salt of a fatty acid, e.g., calcium stearate; the use of a stabilizer is permissible in this invention. However, the quantity thereof should be 0.2 part by weight or less per 100 parts by weight of the resin, otherwise

the adhesion to the aluminum will be impaired.

The amount of cold xylene-soluble matter present in the film of this invention should be 5 wt% or less; when the amount exceeds 5 wt% adhesion to aluminum will be impaired.

The film of this invention has greatly improved properties with respect to aluminum deposition as compared with the conventional filming. It is thus suitable for packaging and condensers.

The invention will now be described in more detail in the following Examples. The measurement methods employed in the specification and in the Examples are as follows:

Adhesion strength to aluminum:

Aluminum deposition was carried out using a vacuum deposition apparatus (Model JEE-SS, made by Nippon Electron K.K.). Both ends of an aluminum-deposited film, having a size of 4 cm x 4 cm were fixed to a glass plate, and peeling off using a Cellophane adhesive tape was carried out. The infrared transmittance of the peeled film and an aluminum nondeposited film was measured using an infrared spectrophotometer. The degree of peeling effected by the Cellophane adhesive tape is represented by the ratio of the two values.

Cold xylene-soluble matter:

Measured according to ISO-TC61-WG 9-PG-6.

EXAMPLES 1 and 2 and COMPARATIVE EXAMPLES 1 to 4

100 parts by weight of a dry, powdered polypropylene homopolymer having a melt flow index of 12 g/10 min were mixed with additives, the kind and amount of which are as shown in Table 1, using a 20-liter super mixer. The resultant mixture was melted, kneaded and pelletized using a 40-mm extruder (made by Tanabe Plastics K.K.), and the pellets were formed into a 30μ thick film using a 40-mm T-die film extruder (made by Sumitomo Heavy Industries, Ltd.). This film was subjected to aluminum deposition to obtain an aluminum deposited film. The cold xylene-soluble matter before the aluminum deposition and the degree of peeling by a Cellophane adhesive tape are shown in Table 1.

EXAMPLES 3 and 4 and COMPARATIVE EXAMPLES 5 and 6

Aluminum deposited films were prepared in the same manner as in Examples 1 and 2 and Comparative Examples 1 to 4 except that a dry, powdered propylene-ethylene copolymer having a melt flow index of 8 g/10 min and containing 3.0 wt% of ethylene was used in Example 3 and 4, and a dry, powdered propylene-ethylene copolymer having a melt flow index of 8 g/10 min and containing 5.0 wt% of ethylene was used in Comparative Examples 5 and 6; and that additives, the kind and amount of which are shown in Table 2, were used. The cold xylene-soluble matter before the aluminum deposition and the degree of peeling effected by a Cellophane adhesive tape are shown in Table 2.

Table 1

| | Irganox 1010 (parts by weight)* | Sumilizer BHT (parts by weight)* | Calcium distearate (parts by weight)* | Silicon dioxide (parts by weight)* | Cold xylene-soluble matter before aluminum deposition (percent by weight) | Degree of peeling by Cellophane adhesive tape % |
|---|---|---|---|---|---|---|
| Example 1 | 0.15 | 0 | 0 | 0 | 2.3 | 0 |
| Example 2 | 0.15 | 0 | 0 | 0.25 | 2.3 | 0 |
| Comparative Example 1 | 0 | 0.15 | 0 | 0 | 2.3 | 15 |
| Comparative Example 2 | 0.25 | 0 | 0 | 0 | 2.3 | 5 |
| Comparative Example 3 | 0.10 | 0 | 0.25 | 0 | 2.3 | 25 |
| Comparative Example 4 | 0.10 | 0 | 0 | 0.60 | 2.3 | 40 |
| Example 3 | 0.15 | 0 | 0 | 0 | 4.0 | 0 |
| Example 4 | 0.15 | 0 | 0 | 0.25 | 4.0 | 0 |
| Comparative Example 5 | 0.15 | 0 | 0 | 0 | 7.0 | 25 |
| Comparative Example 6 | 0.15 | 0 | 0 | 0.25 | 7.0 | 30 |

* for 100 parts of polypropylene resin

Claims:

1. A film suitable for the deposition of aluminum thereon and formed from a polypropylene resin composition, characterised in that the composition comprises a blend of 100 parts by weight of polypropylene resin with (i) 0.01 to 0.2 part by weight of an antioxidant having a melting point of at least 80°C and (ii) 0 to 0.5 part by weight of an antiblocking agent, and in that the blend contains 5 wt% or less of cold-xylene soluble matter.

2. A film as claimed in Claim 1, in which the polypropylene resin is a propylene homopolymer, a copolymer or propylene and ethylene, a copolymer of propylene and butene-1 or a copolymer of propylene, ethylene and butene-1.

3. A film as claimed in Claim 1 or 2, in which the antiblocking agent is present in the composition in an amount of less than 0.3 part per 100 parts by weight of polypropylene resin.

4. A film as claimed in Claim 1, 2 or 3, in which the blend additionally comprises a stabilizer in an amount of 0.2 parts by weight or less per 100 parts by weight of polypropylene resin.